**Europäisches Patentamt**

**European Patent Office**

**Office européen des brevets**

(19)

(11) Publication number : **0 576 254 A2**

# (12) EUROPEAN PATENT APPLICATION

(21) Application number : **93304867.0**

(22) Date of filing : **22.06.93**

(51) Int. Cl.⁵ : **C22B 21/00, C22B 9/02**

(30) Priority : **22.06.92 US 902025**

(43) Date of publication of application :
**29.12.93 Bulletin 93/52**

(84) Designated Contracting States :
**AT CH DE ES FR GB IT LI NL**

(71) Applicant : **PLASMA PROCESSING
CORPORATION**
**Millwood, West Virginia 25262-0249 (US)**

(72) Inventor : **Lindsay, Richard Dale**
**1316 Arrowhead Drive**
**Brentwood, Tennessee 37027 (US)**

(74) Representative : **Gallafent, Richard John**
**GALLAFENT & CO. 8 Staple Inn**
**London WCIV 7QH (GB)**

(54) **Reactive non-metallic product recovered from dross.**

(57) A process for treatment of salt cake or non-metallic products obtained from black dross as herein defined to remove chlorides to below about 3% under conditions whereby the aluminium nitrides within the treated material are concentrated, thereby increasing the net energy value of the treated material to provide reactive non-metallic products. The reactive non-metallic products may be converted into refractory or abrasive articles using low energy input levels.

**EP 0 576 254 A2**

EP 0 576 254 A2

This invention relates to the recovery of non-metallic product (NMP) from aluminium dross. More particularly, the invention relates to a process for the treatment of non-metallic product containing salt obtained from black dross or salt cake obtained from a process wherein aluminium dross is treated with salt in a furnace to remove free aluminium. "Black dross" as used herein is dross containing salt, usually added when treating aluminium ore to recover aluminium. "Salt cake" is the residue from the treatment of dross to recover free aluminium from dross where salt is used in the treatment of the dross. The NMP from black dross and salt cake contains substantial amounts of undesirable salt, and additionally, components such as aluminium nitrides and unrecoverable free aluminium. The present invention treats the NMP from black dross and salt cake to the extent of removing chlorides while retaining a high content or aluminium nitride and, to the extent possible, the unrecoverable free aluminium, to provide a reactive NMP.

When a body of aluminium is melted in a furnace for purposes of recovering aluminium from ore or the like, dross forms on the surface of the molten aluminium and must be periodically removed, for example by skimming or similar operation. The removed dross generally contains substantial amounts of free aluminium as well as aluminium oxides and certain other metals and metal salts of magnesium, manganese, and lithium, depending on the nature of the aluminium or aluminium alloy being treated. In some processes, the aluminium ore is treated with salt whereby the skimmed dross contains salt, which is labelled "black dross". It is desirable to recover from the aluminium dross to the extent possible the free aluminium since this free aluminium comprises substantial economic value. In one conventional way of treating the dross to recover free aluminium, a salt such as sodium chloride is used to blanket the molten dross. The free aluminium is then separated from the dross, providing free aluminium and a non-metallic product containing the aluminium oxides and other materials such as aluminium nitrides, aluminium chlorides and aluminium carbides, as well as substantial amounts of salt. The entire non-metallic materials recovered from the dross treatment are referred to herein as non-metallic products (NMPs). These non-metallic products, to a substantial part using the conventional salt treatment or obtained from black dross, are considered waste materials and conventionally are disposed of in landfills.

These non-metallic products since they contain salt and aluminium nitrides (AlN) cannot be disposed of in conventional landfills without treatment, however, since the salt can be leached out during rainfall and the aluminium nitrides are reactive when in contact with moisture, producing ammonium. As a result of this reactivity and ecological considerations, it has been necessary before carrying the NMPs to landfills to remove the salt and aluminium nitrides from the NMPs recovered from black dross or from salt cake. This has been conventionally done utilising a desalinisation plant wherein the NMPs from salt cake or black dross are exhaustively washed and treated to remove salt and the aluminium nitrides to as low a level as possible, preferably below less than one percent. The treatment is costly, and additional landfills are becoming scarce.

It has been found according to the present invention that it is advantageous not to treat the NMPs from salt cake or black dross so as to remove the aluminium nitrides. Rather it has been found that non-metallic products containing aluminium nitrides (AlN) can be milled and screened and then advantageously utilised to produce useful refractory, abrasive and the like articles. The AlN within the non-metallic product are reactive in processes converting the non-metallic product into useful refractories and the like articles to provide heat energy useful in forming the desired refractories and like articles. The present invention, therefore, not only eliminates the need for the economically disadvantageous exhaustive desalinisation treatment of the dross but also provides a useful source of raw material, eliminating the need to put the material into a landfill.

Accordingly, the present invention provides a process wherein a desalinisation facility is associated with a dross treatment operation, designed and constructed to wash or mill salt cake or NMPs from black dross whereby the salt levels are reduced by such operations to about 3% by weight (unless specified otherwise all percentages are by weight) or less but where the AlN levels are preserved as much as possible, preferably above about 7% and more preferably in the 12%-24% range. The process of the present invention provides a reactive material, i.e., reactive NMPs from dross, containing reactive AlN. The process comprises the steps of treating salt cake or NMPs from black dross to remove the chlorides to below about 3% and concentrate the AlN within the reactive material, preferably above about 7% and more preferably 12%-24% range, thereby increasing the net energy value of the treated material. The conditions are controlled so as not to substantially reduce the AlN content. The preferred method of treatment according to the present invention is by water washing of the salt cake or NMPs from black dross, milling and drying or by milling the salt cake or NMPs from black dross followed by washing and drying.

The reactive NMPs will contain varying amounts of AlN depending on the starting material. Normally, however, the processed NMPs will contain from about 7% to 25% AlN. Additionally, the processed NMPs will contain unrecoverably free aluminium in the amount of from about 2% to 8%. The AlN and free aluminium are an available energy source when converting the NMPs into useful articles. Thus, assuming 6% Al and 18% AlN content, for each tonne of NMPs, the available energy is calculated as follows:

$$1,000Kg \times 18\% = 180Kg\ AlN$$

2

$$1,000Kg \times 6\% = 60Kg\ Al$$

as:

```
100Kg of Al  = 882 Kwh energy
100Kg of AlN = 481 Kwh energy


60Kg Al   =   529 Kwh
180Kg AlN =   866 Kwh
Available Energy = 1,395 Kwh/tonne
```

The available energy, in processing the NMPs into abrasive or refractory materials, permits the reaction to proceed without substantial input of heat once the reaction temperature is reached, substantially lowering expected processing costs.

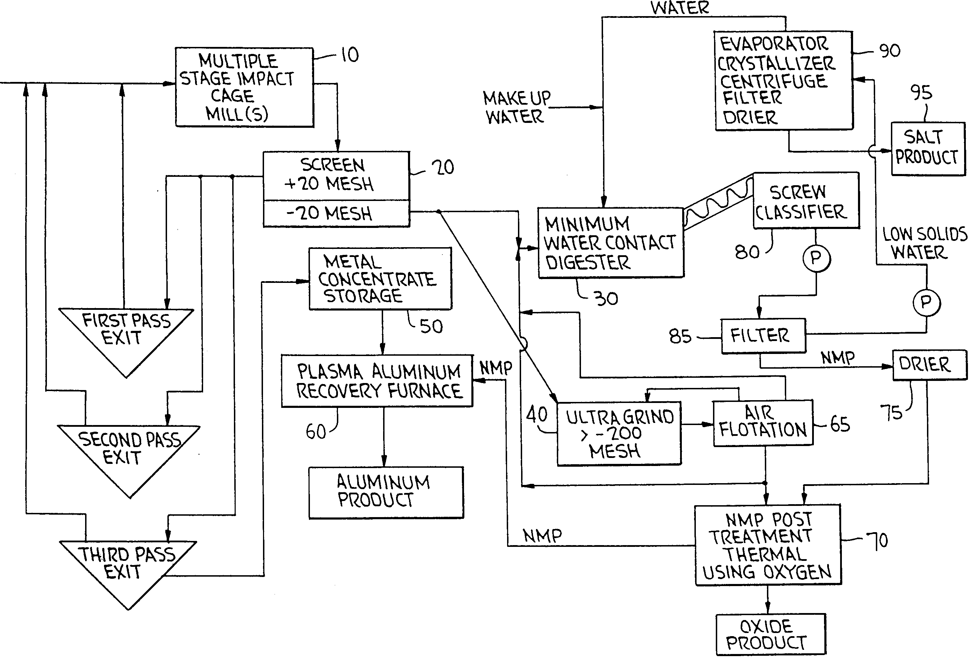

The drawing schematically illustrates preferred treatment sequences according to the present invention. In a conventional aluminium processing operation, aluminium ore is melted in a furnace and the metallic aluminium is recovered along with dross resulting from an ore skimming operation. In operations which do not use salt in the treatment of the ore, salt-free dross or "white dross" is recovered. White dross containing high levels of aluminium nitride can be treated directly in a plasma energy furnace as disclosed in US Patent Nos. 4877448, 4997476 and 5030273 to recover free aluminium and valuable non-metallic products containing reactive aluminium nitride. However, in processes where salt is used in the ore treatment operation to salt out the aluminium, black dross or dross containing salt is obtained. In the conventional processes for treatment of dross to recover free aluminium, i.e., before the use of plasma energy was known, the dross, white or black, is heated in a refractory furnace to above the melting point of free aluminium. To help separate the free aluminium from NMPs, the dross is covered with salt. This process provided salt cake containing large amounts of salt as well as non-metallic product containing the reactive aluminium nitrides. As above stated, conventionally this material was exhaustively washed in a desalinisation plant to remove all of the salt and aluminium nitrides to provide a suitable waste product for transport to a landfill. According to the present invention, this material is now washed only sufficiently to remove the chlorides, substantially lowering process costs, while retaining the aluminium nitrides to provide a valuable material for processing into refractories, abrasives and the like.

As illustrated in the drawing, salt cake or NMPs from black dross are fed to a multiple stage impact cage mill 10. This impact mill, through a hammering action, separates the aluminium metal particles from the salt and metal oxides. Thus, the hammering is such that it will knock the salt and metal oxide particles from the metal and fractionate these particles while substantially retaining the aluminium particles in their original size, at most causing some deformation of the particles. The material from impact mill 10 is then fed to a screening station 20 where the material having a particle size 0.84mm (-20 mesh) and below is separated and fed to either a minimum contact water digester 30 or to an ultra grind station 40. The material from screen station 20 having a particle size above 0.84mm (20 mesh) and above is returned to the multiple stage impact mill 10. The impact mill 10 is a batch type mill, and "new" material is not fed to the impact mill until all of the original batch, after a series of passes through the mill, is processed to provide metal particles above about 0.84mm (+20 mesh) and the non-metal materials are reduced to a particle size below 0.84mm (-20 mesh). In the drawing, three passes through mill 10 are shown. However, depending on the material, additional passes may be required.

The material having a particle size of above 0.84mm (+20 mesh) will have a very high metal content and low salt content. This material is fed to a bin 50 where it subsequently will be fed to a plasma aluminium recovery furnace 60 of type disclosed in US Patent Nos. 4877448, 4997476 and 5030273 where free aluminium is separated form the NMPs. The NMPs will then be fed to an NMP post treatment station 70 for further processing and collected as oxides.

The material having a particle size of 0.84mm (-20 mesh) and below which was fed to the minimum contact water digester 30 is then sent through a screw classifier 80 from the minimum contact water digester and pumped through a filter 85. The solid NMPs are removed by the filter, with low solids water being passed through station 90 comprising an evaporator, crystalliser, centrifuge, filter and dryer which removes salt product 95. The water from the evaporator is returned to the minimum contact water digester 30, with makeup water being added as needed.

The NMP from filter 85 which is passed through a series of dryers 75 will have a chloride content of less than 3% with a high aluminium nitride content, preferably in the range of about 12% to 24%. After drying, the

3

material is sent to NMP post-treatment section 70.

In an alternative embodiment, the material having a particle size of 0.84mm (-20 mesh) and below is sent to ultra grinder 40 where the particle size is reduced to 0.074mm (-200 mesh), which is then fed to an air floatation chamber 65. In this chamber, the heavy material which is NMPs having less than 3% chlorides is sent to NMP post-treatment section 70. The lighter material containing in excess of 3% chlorides is fed to the minimum contact water digester 30 for processing as above described. The milling and water washing is designed to remove substantially all of the chlorides in the NMPs while concentrating the AIN. It is desirable, therefore, to monitor the chlorides as the process proceeds.

The present invention provides a highly useful material from a material heretofore considered waste. However, even as waste, the material before it could be disposed of as waste in a landfill required extensive and costly treatment. The advantages of the present invention, therefore, are at least twofold: precluding the need for treating a waste by-product before it can be disposed of as waste, and providing a material having useful properties for useful applications.

Although the present invention is primarily illustrated with respect to NMPs from black dross and salt cake, it can at times be desirable to mix black dross and white dross with such materials to upgrade the metal and AIN content. Moreover, the present invention can be used with black dross and white dross, again to upgrade the metal and AIN content.

## Claims

1. Process of providing a reactive material containing aluminum nitrides comprising treating a material selected from the group consisting of salt cake, non-metallic products obtained from black dross and white dross, black dross, white dross and mixtures thereof as herein defined to remove chlorides from said material to below about 3% under conditions whereby the aluminum nitrides within said material are concentrated, thereby increasing the net energy value of the treated material to provide reactive NMPs, and recovering said reactive NMPs for subsequent application.

2. The process of claim 1 wherein said treatment comprises a water wash treatment followed by drying.

3. The process of claim 1 wherein said treatment comprises milling, water washing and drying.

4. A reactive material containing aluminum nitrides which is the product of the process wherein a material selected from the group consisting of salt cake, non-metallic products obtained from black dross and white dross, black dross, white dross and mixtures thereof as herein defined is treated to remove chlorides from said material to below about 3% under conditions whereby the aluminum nitrides within said material are concentrated, thereby increasing the net energy value of the treated material to provide a material containing reactive aluminum nitrides.

5. The material of claim 4 wherein said aluminum nitrides comprise from 3%-24% of said material.

6. The material of claim 4 wherein said aluminum nitrides comprise from 12%-18% of said material.

7. A process for providing a reactive material containing aluminium nitrides comprising treating an aluminium dross material containing chlorides characterised by removal of the chlorides from the material to below about 3% by weight under conditions in which the aluminium nitrides within the material are concentrated, thereby increasing the net energy value of the treated material to provide reactive non-metallic products (NMPs), and recovering the reactive NMPs for subsequent applications.

8. A process according to claim 7 characterised in that the aluminium dross material is salt cake, non-metallic products obtained from black dross and white dross, black dross, white dross, or a mixture of two or more of the aforesaid materials.

9. A process according to claim 7 or 8 characterised in that the processing is such that the aluminium nitrides in the treated material comprise from 3%-24% by weight of the treated material.

10. A process according to any one of claims 7 to 9 characterised in that the processing is such that the aluminium nitrides in the treated material comprise from 12%-18% by weight of the treated material.

MULTIPLE STAGE IMPACT CAGE MILL(S) — 10

SCREEN +20 MESH / -20 MESH — 20

FIRST PASS EXIT

SECOND PASS EXIT

THIRD PASS EXIT

METAL CONCENTRATE STORAGE — 50

PLASMA ALUMINUM RECOVERY FURNACE — 60

ALUMINUM PRODUCT

MAKE UP WATER

WATER

EVAPORATOR CRYSTALLIZER CENTRIFUGE FILTER DRIER — 90

SALT PRODUCT — 95

SCREW CLASSIFIER — 80

MINIMUM WATER CONTACT DIGESTER — 30

LOW SOLIDS WATER

FILTER — 85

DRIER — 75

NMP

ULTRA GRIND > -200 MESH — 40

AIR FLOTATION — 65

NMP POST TREATMENT THERMAL USING OXYGEN — 70

NMP

OXIDE PRODUCT

EP 0 576 254 A2